Europäisches Patentamt

European Patent Office

Office européen des brevets

(11) Publication number: **0 447 557 A1**

# EUROPEAN PATENT APPLICATION
## published in accordance with Art. 158(3) EPC

(21) Application number: 90914761.3

(22) Date of filing: 03.10.90

(86) International application number:
PCT/JP90/01274

(87) International publication number:
WO 91/04927 (18.04.91 91/09)

(51) Int. Cl.5: **B65D 85/575**

(30) Priority: 03.10.89 JP 116929/89 U

(43) Date of publication of application:
25.09.91 Bulletin 91/39

(84) Designated Contracting States:
DE GB

(71) Applicant: HITACHI MAXELL, LTD.
1-88, Ushitora-1-chome, Ibaraki-shi
Osaka-fu 567(JP)

(72) Inventor: KAGANO, Shinichi 35-3, Shirie
Oyamazaki-cho
Otokuni-gun
Kyoto 618(JP)

(74) Representative: Selting, Günther, Dipl.-Ing. et
al
Patentanwälte von Kreisler, Selting, Werner
Deichmannhaus am Hauptbahnhof
W-5000 Köln 1(DE)

(54) **PROTECTIVE CASE FOR TAPE CARTRIDGE.**

(57) A protective case for a tape cartridge suitable for portable use, which is characterized in that it has front, rear, right and left side walls and the outer surface (20) of at least one of these walls is shaped in an arc form obtained by connecting a plurality of outwardly projecting arcs having different radii of curvature.

Fig. 3

Fig. 4

FIELD OF THE INVENTION

The present invention relates to a protective case of a tape cartridge and, in particular, improvement of a shape of the protective case for portable use of the tape cartridge.

Description of the Related Art

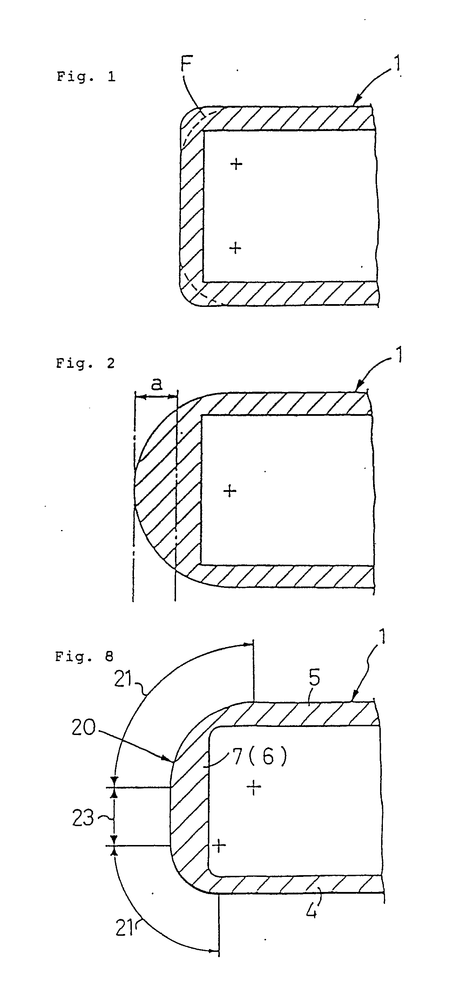

Recently, with wide spreading of small tape players, a tape cartridge is often contained in a plastic protective case and carried. Since most protective cases are of rectangular shape and their corners are sharp, the corners tend to be caught in a pocket or a bag so that they damage or tear an inner cloth of the pocket or a lining of the gag. To overcome such drawbacks, as shown in Fig. 1, a corner of a side wall of a protective case 1 is rounded to remove sharpness.

However, to produce such protective case having the round corner, the corner should be rounded without changing outer and inner sizes of the protective case. For this reason, an outer surface of the corner of the side wall has a radius. But, the radius is too small to prevent catching of other materials. If the radius is made larger as shown by broken lines F in Fig. 1, a wall thickness at the corner becomes thin, so that the corner has decreased strength and tends to be broken when the case receives drop impact.

To solve such problems, for example, a cross section of the side wall of the protective case 1 is formed in a shape as shown in Fig. 2, and not only the corner of the side wall but also an entire outer surface is formed in a semi-circular shape with leaving an inner surface flat so as to keep the inner case size unchanged. However, by this design, the outer size of the case increases by a thickness "a", and it is disadvantageous that unused cases are not received in a storing box.

DETAILED DESCRIPTION OF THE INVENTION

The present invention intends to solve the above problems, and it is an object of the present invention to provide a protective case which is advantageously carried without decrease of case strength or increase of the outer size of the case by suitably designing a round outer surface of the side wall of the protective case.

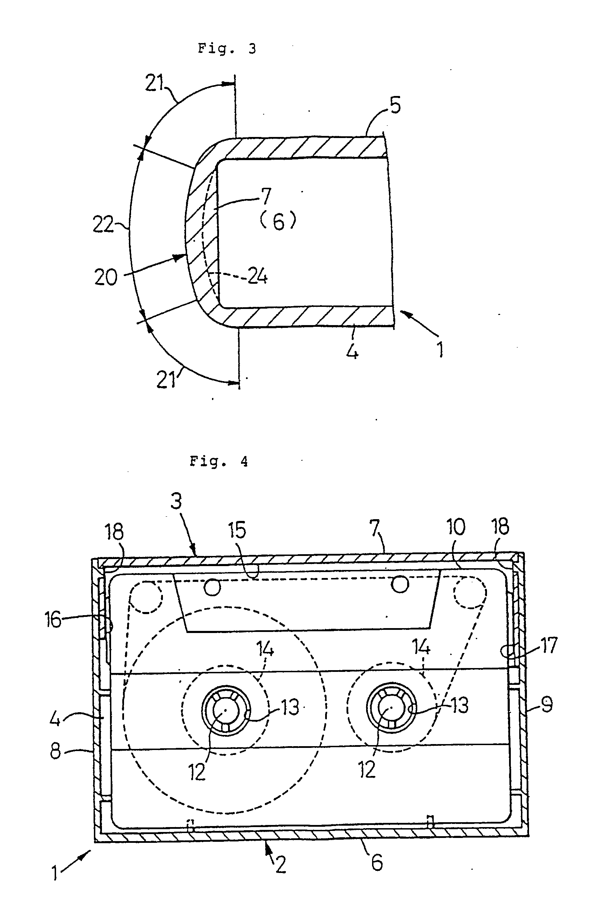

With a protective case of a tape cartridge of the present invention, for example, as shown in Fig. 3, an outer surface 20 of a cross section of at least one of front, rear, left and right side walls 6, 7, 8 and 9 is formed in a sector shape consisting of at least two outwardly convex arcs 21, 22 which are connected and have different curvatures each other.

Since the side wall having the outer surface 20 which is formed in an outwardly convex shape is not caught by the inner cloth of the pocket or the lining of the bag, the protective case 1 is smoothly put in the pocket and the bag and does not damage them.

The arc-form outer surface 20 is formed by combining plural arcs 21, 22 having different curvatures from each other, the wall thickness of the corner is not decreased unlike the conventional case in which the sharpness is removed only from the corner, and the outer size is not so enlarged as in the case of the protective case in which the entire outer surface of the side wall is formed in a semi-circular shape having a uniform curvature.

BRIEF DESCRIPTION OF THE DRAWINGS

Fig. 1 is an enlarged cross sectional view of a part of a conventional protective case,
Fig. 2 is an enlarged cross sectional view of a part of a protective case to be used as a comparative example with the present invention,
Figs. 3 to 7 show an example of the protective case of the present invention, in which
Fig. 3 is an enlarged cross sectional view of an essential part,
Fig. 4 is a cross sectional view of the entire protective case,

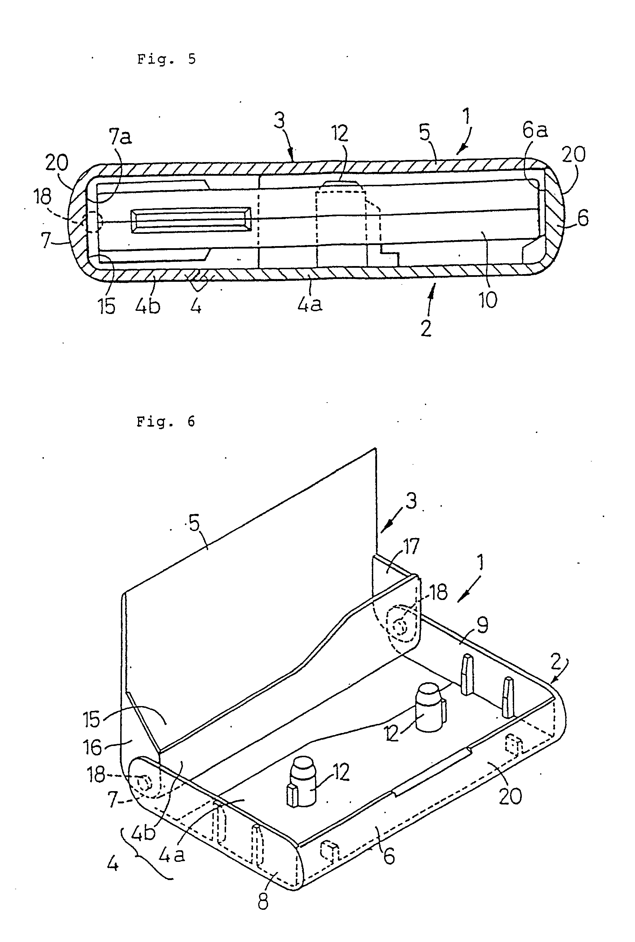

Fig. 5 is a longitudinal sectional view of the entire protective case,
Fig. 6 is a perspective view of the protective case with a lid opened,

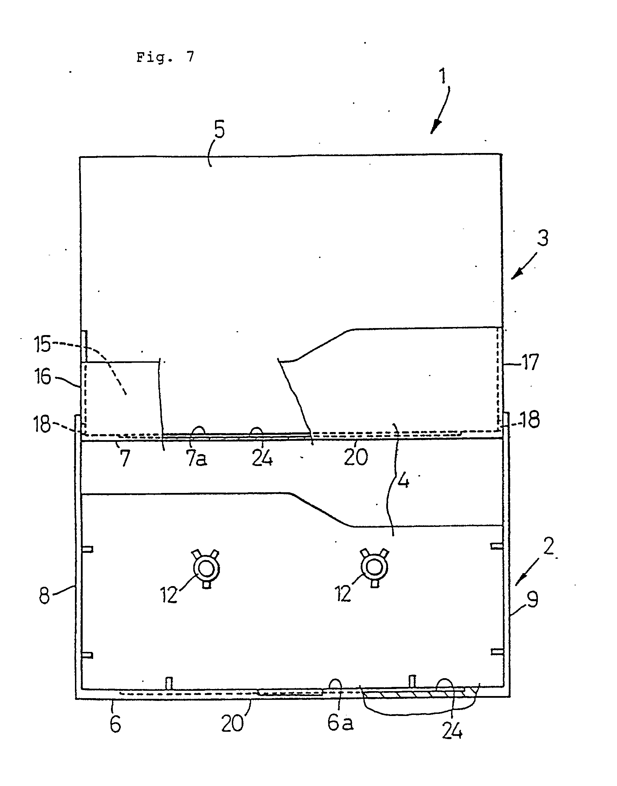

Fig. 7 is a partly broken plan view of the protective view with a lid opened, and
Fig. 8 is an enlarged cross section of an essential part of an another example of the protective case of the present invention.

BEST EMBODIMENTS FOR WORKING THE INVENTION

Figs. 3 to 7 show an example of the protective case of the tape cartridge according to the present invention.

In Figs. 4 and 6, a protective case 1 comprises a rectangular plastic case body 2 and a plastic lid 3 formed in a letter rack form, and a space for receiving a tape cartridge 10 is formed by three pairs of side walls formed in the body 2 and the lid 3, namely, a lower wall 4 and an upper wall 5, a front wall 6 and rear wall 7, and left and right side walls 8, 9, each pair of walls faces each other when the lid 3 is closed.

The case body 2 is integrally formed from a case bottom 4a which constitutes a front part of the lower wall 4, and front, left and right walls 6, 8 and 9 which upwardly stand from respective edges of the lower wall 4, and a pair of left and right engaging means 12 are positioned on the inner surface of the case bottom 4a. The engaging means 12 engage with hubs 14 for winding a tape through holes 13 for inserting driving shafts of the tape cartridge 10 and prevent free rotation of the hubs when the tape cartridge is received in the protective case.

The lid 3 has the upper wall 5 which covers an upper opening of the case body 2, and an integrally formed pocket 15 which receives the tape cartridge on an inner surface of the rear edge of the lid. The pocket 15 consists of the rear wall 7 which is perpendicularly connected to the rear edge of the upper wall 5, a pocket bottom 4b which is perpendicularly connected to the rear wall 7 and constitutes a rear part of the lower wall 4 and pocket walls 16, 17 which close left and right sides of the pocket.

The lid 3 and the case body 2 are connected to each other so that they are pivotably opened and closed through pivot means 18 which are provided between the left and right walls 8, 9 of the case body 2 and the pocket side walls 16, 17, respectively. In detail, each shaft is protruded from the inner surface of each of the left and right walls 8, 9 with facing the shafts each other, and pivoted in a respective bearing hole formed through the left and right pocket side walls 16, 17.

When the above protective case is opened or closed, the rear and front walls are often held with a hand, and the protective case is often put in the bag and the like from its front wall 6 or the rear wall 7. Then, the cross section of each of the outer surfaces 20 of the front and rear walls 6, 7 is of the outwardly convex sector shape.

As shown in Figs. 3 and 5, the sector shape outer surface 20 of the rear wall 7 is formed in a semi-ellipsoidal form divided along a major axis from corner arcs 21, 21 which are connected to the lower wall 4 and upper wall 5, respectively, and an intermediate arc 22 which connects the arcs 21, 21 with no joint. In this case, a radius of curvature of the corner arc 21 is made as small as possible to maintain the wall thickness of the corner. The radii of curvature of the upper and lower corner arcs 21, 21 may be the same or different from each other. A radius of curvature of the intermediate arc 22 can be several times, for example, 2.5 to 3.5 times larger than that of the corner arc 21 so as to prevent large outward protrusion of the outer surface 20 as shown in Fig. 2. Because of the smoothly curved surface by making the radius of curvature of the intermediate arc 22 larger than that of the corner arc 21, a parting line plane is easily stabilized when a parting line is provided on the mostly protruded part of the arc 22, this resulting in advantageous prolongation of a life of a mold.

The sector shape outer surface 20 of the front wall 6 is also formed in a semi-ellipsoidal form by combining the corner arcs 21 and the intermediate arc 22 as above. The maximum distance between the front and rear outer surfaces 20 and 20 is substantially the same as that of the conventional case. Of course, a distance between the inner surfaces of the front and rear walls 6, 7 is the same as that of the conventional case.

In Fig. 3, the sector shape outer surface 20 is formed by the combination of the corner arcs 21 and the intermediate arc 22. But, the number of the arcs 21, 22 having different curvatures is not limited. The arcs 21, 22 having different curvatures should be connected without any joint. For example, as shown in Fig. 8, the corner arcs 21, 21 may be connected by a linear part 23 in place of the aro.

In the embodiments in the drawings, the inner edge at the corner is rounded, but it may not be rounded.

As shown in Fig. 7, in the cross section of the front and rear walls 6, 7, concave parts 24 having a thinner wall thickness are formed on the inner surfaces 6a, 7a at the maximum wall thickness parts of the front and rear walls 6 and 7 so as to unify the wall thickness, thereby, a strain due to a difference of shrinkage caused by nonuniform wall thickness during cooling is prevented advantageously.

Another example will be explained.

When, in addition to the front and rear walls 6, 7, the outer surfaces 20 of the left and right walls 8, 9 are formed in the outwardly convex sector shape, the sharp edges disappear from the case body. In the present invention, at least one of the front, rear, left and right walls 6, 7, 8 and 9 should have the above cross section. In particular, in the previous example, a title-indicating surface of an indexing card is placed on the inner surface of the rear wall 7 which faces the pocket 15. Then, the sector shape part of the outer surface 20 of the rear wall 7 acts as a lens. Thereby, the title-indicating surface is easily read even from a side direction, so that the titles are easily searched from one position when many protective cases 1 are stored.

The present invention can be applied to a protective case 1 comprising a case body 2 and a lid 3 which are connected with an integrally molded thin hinge.

The present invention can be applied to a protective case which receives a VHS-C type tape cartridge and the like.

As explained above, in the rectangular shape protective case of the present invention, since at least one of the front, rear, left and right walls 6, 7, 8 and 9 has the outer surface 20 in the outwardly concave sector shape in its cross section, the protective case is easily put in a pocket or a bag from the wall side having such outer surface 20, and it is possible to avoid the damage of the liner or other materials in the pocket or bag by the protective case 1. In addition, since the outer surface 20 is formed in the sector shape from the combination of the plural arcs 21, 22 having the different curvatures, the wall thickness at the corner is made sufficiently thick so that the decrease of the case strength is prevented, and also the increase of the outer size of the case is suppressed. Therefore, the protective case of the present invention is received in the conventional storing box and the like without difficulty.

## Claims

1. A rectangular protective case having front, rear, left and right walls (6, 7, 8, 9), wherein an outer surface (20) of a cross section of at least one of said front, rear, left and right side walls (6, 7, 8, 9) is formed in a sector shape consisting of at least two outwardly convex arcs (21, 22) which are connected and have different ourvatures each other.

Fig. 1

F

1

Fig. 2

a

1

Fig. 8

21

20

5

1

7(6)

23

21

4

Fig. 3

Fig. 4

Fig. 5

Fig. 6

Fig. 7

# INTERNATIONAL SEARCH REPORT

International Application No  PCT/JP90/01274

## I. CLASSIFICATION OF SUBJECT MATTER (if several classification symbols apply, indicate all) 6

According to International Patent Classification (IPC) or to both National Classification and IPC

Int. Cl$^5$  B65D85/575

## II. FIELDS SEARCHED

### Minimum Documentation Searched 7

| Classification System | Classification Symbols |
|---|---|
| IPC | B65D85/575 |

### Documentation Searched other than Minimum Documentation to the Extent that such Documents are Included in the Fields Searched 8

| | |
|---|---|
| Jitsuyo Shinan Koho | 1926 – 1990 |
| Kokai Jitsuyo Shinan Koho | 1971 – 1990 |

## III. DOCUMENTS CONSIDERED TO BE RELEVANT 9

| Category* | Citation of Document, 11 with indication, where appropriate, of the relevant passages 12 | Relevant to Claim No. 13 |
|---|---|---|
| Y | JP, U, 57-22884 (Colombia Magne Products K.K.), February 5, 1982 (05. 02. 82) | 1 |
| Y | JP, U, 58-69387 (Olympus Optical Co., Ltd.), May 11, 1983 (11. 05. 83) | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| December 11, 1990 (11. 12. 90) | January 7, 1991 (07. 01. 91) |
| International Searching Authority | Signature of Authorized Officer |
| Japanese Patent Office | |

Form PCT/ISA/210 (second sheet) (January 1985)